# EUROPEAN PATENT SPECIFICATION

(11) **EP 4 303 463 B1**
(45) Date of publication and mention of the grant of the patent: **25.12.2024**
(21) Application number: 22183252.0
(22) Date of filing: 06.07.2022
(51) Int. Cl.: F16D 65/08, F16D 65/092, F16D 65/12, F16D 65/22

(54) **BRAKE ASSEMBLY FOR BRAKING A WHEEL OF A VEHICLE**
BREMSVORRICHTUNG ZUM BREMSEN EINES RADES EINES FAHRZEUGS
ENSEMBLE FREIN DE FREINAGE D'UNE ROUE D'UN VÉHICULE

(43) Date of publication of application: 10.01.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); Györke, Zsombor, 8360 Keszthely (HU); HEIGL, Korbinian, 85652 Pliening (DE); Hös, Levente, 1047 Budapest (HU); HOLLOSI, Mate, 1097 Budapest (HU); KLINGNER, Matthias, 82272 Moorenweis (DE); KOKREHEL, Csaba, 1119 Budapest (HU); Krüger, Sven, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1042 Budapest (HU)

(56) References cited:
- CN-A- 110 778 711
- US-A- 4 220 223
- US-A1- 2009 192 690

## Description

The present invention relates to a brake assembly for braking a wheel of a vehicle and a vehicle comprising such brake assembly.

In today's commercial vehicles usually brake pads as braking members cover a segment of the brake rotor or brake disc, respectively, as brake member to be braked by respective braking members. One brake pad is positioned on each rotor side and pressed onto the rotor via a clamping mechanism and a caliper or from both sides with a clamping mechanism. The rotor is fixedly mounted in an axial direction to the wheel end and rotates. The brake pads do not rotate but are configured to slide in the axial direction in order to provide a clamping stroke. Usually, the brake pads are out of a lining material and the rotor is out of metal, e.g. an iron cast.

A further possibility is an inverted rotor approach. The clamping force will be applied "inside-out". Lining material will be pressed from clamping mechanism in axial direction onto the rotor. The rotor itself is out of a metal such as iron cast. The rotor covers the clamping mechanism and the linings almost completely.

Due to the covered linings in the case of service operations, e.g. due to wear depending on the exchange of lining or rotor, the whole brake assembly has to be disassembled from the wheel end to get access to the wear related parts. After such service operation, the reassembling also relates to the whole brake assembly. Accordingly, a service operation requires the handling of a lot of parts, in particular very heavy parts, and may also affect wheel bearings and hubs to be disassembled and reassembled in parallel. As a result, the exchange of wear parts is complex with high labor efforts.

The following patent publications disclose conventional braking assemblies:
US 2009/192690 A1, US4220223 A and CN110778711 A.

Therefore, it is an object of the present invention to provide a brake assembly for braking a wheel of a vehicle and a vehicle comprising such brake assembly capable of providing reduced efforts for exchanging wear parts with respect to a frictional pairing of braking members and brake members.

The object is solved by the subject-matter of the independent claims. Further aspects of the present invention are subject to the dependent claims.

According to the present invention, a brake assembly for braking a wheel of a vehicle, comprises a brake member assembly comprising at least one brake member configured to rotate about a rotational axis, at least one braking member arranged on a radial surface side of the at least one brake member with respect to the rotational axis, wherein the at least one braking member is axially movable with respect to the rotational axis, and an actuator mechanism configured to move the at least one braking member in the axial direction towards the at least one brake member to apply a braking force on the radial surface of the at least one brake member. The at least one brake member provides at least one brake member portion arranged and configured to provide a contact surface on the radial surface side of the at least one brake member for the at least one braking member to form a frictional pairing with the at least one braking member upon contact, wherein a wear rate of a material of the at least one brake member portion intended for the frictional pairing is higher than a wear rate a material of the at least one braking member intended for the frictional pairing.

Accordingly, the inventive brake assembly is based on the arrangement of the main wear part of the frictional pairing on the at least one brake member, while the part less prone to wear is arranged on the at least one braking member. In other words, the contact surface for a frictional pairing to transfer a braking force with the higher wear rate is arranged on the rotor as brake member and the counter-contact surface is arranged on the braking member being static with respect to a rotational movement. In principle, the brake member portion thereby provides the brake lining instead of the braking member. Since the brake member portion with the higher wear rate relative to the braking member may be more often subject to an exchange due to wear, it may be sufficient to access only the brake member. The braking member, which is associated with the actuator mechanism in an operational assembly, may therefore not need to be accessible or even if, may be detached together with the actuator mechanism as a complete assembly group. Consequently, labor efforts may be reduced. The actuator mechanism is the mechanism to press or clamp the at least one braking member against the brake member. Accordingly, the actuator mechanism may also be understood as clamping mechanism or clamping unit for the at least one braking member. The actuator mechanism may comprise or being operatively connected to a driving mechanism to drive the actuator mechanism to move the at least one braking member. Such driving mechanism may therefore be also understood as actuation mechanism for the actuator mechanism.

In some embodiments, the brake member assembly comprises at least one first brake member and at least one second brake member opposed to each other in the axial direction with respect to the rotational axis, and the brake assembly comprises at least one first braking member and at least one second braking member opposed to each other in the axial direction with respect to the rotational axis, wherein the at least one first braking member is configured to apply a braking force on the first brake member and the at least one second braking member is configured to apply a braking force on the second brake member. The at least one first braking member and the at least one second braking member are arranged between the at least one first brake member and the at least one second member in the axial direction with respect to the rotational axis.

According to the above configuration, the brake assembly comprises a brake member assembly with two brake members, e.g. two brake discs, axially distanced with respect to the rotational axis. The first and second braking members assigned to the first and second brake member, respectively, are arranged within the axial distance of the brake members to be moved "inside-out" to apply a braking force on the respectively assigned brake member. The first and second braking members are thereby covered by the first and second braking member. The arrangement of the part of the frictional pairing subject to main wear, i.e. the brake member portion with the higher wear rate with respect to the braking member, on the first and second brake member allows easier access and/or ability to be disassembled. Specifically, an exchange of the main wear part refers to the respective brake member positioned on an external side of the brake assembly.

Preferably, a wear volume of the at least one first brake member portion differs from a wear volume of the at least one second brake member portion. Alternatively or in addition, a wear volume of the at least one first braking member differs from a wear volume of the at least one second braking member.

The different wear volumes may be provided via the thickness and/or cross section area of the respective brake member portion and/or braking members. Accordingly, each frictional pairing on each side of the brake assembly in the axial direction with respect to the rotational axis may be configured to adapt the respective wear speeds to different operation conditions, such as operating temperatures, on an inboard and an outboard side of the brake assembly. The inboard side is the side facing the vehicle the brake assembly is assembled to in the axial direction, while the outboard side is facing away from the vehicle in the opposite direction. Preferably, the different wear volumes are selected to provide an exchange requirement of the first brake member portion and the second brake member portion at substantially the same time to reduce the number of exchange procedures without excessive waste of wear parts due to being exchanged without a substantial need.

In some embodiments, at least the portion of the at least one braking member intended for the frictional pairing with the at least one brake member portion is made of metal, preferably of an iron cast, ceramic, composite compounds or a sandwich of different materials.

The portion of the at least one braking member intended for the friction pairing, i.e. the contact surface for the frictional pairing, is thereby selected to provide a sufficient wear resistance against wear due to the frictional pairing with the at least one brake member portion to provide a low wear rate or even negligible wear rate in comparison to the wear rate of the brake member portion providing the brake lining.

The at least one braking member may be made from metal, ceramic, composite compounds or a sandwich of different materials. Alternatively, at least the contact surface of the at least one braking member for the frictional pairing may be coated with metal, ceramic or composite compounds or being formed by a sandwich of different materials. The selection of materials for the contact surface and/or the braking member as such may also be subject to considerations with respect to fatigue, strength, thermal isolation and/or thermal stability properties.

In some embodiments, the at least one brake member portion and/or the at least one braking member are/is formed as closed ring extending around the rotational axis.

The at least one brake member portion as closed ring is configured and arranged such that a portion of the ring faces the at least one braking member in any rotational angle of the at least one brake member with such brake member portion. Thereby, the frictional pairing of the at least one brake member portion is ensured independent from the rotational angle of the respective brake member. Alternatively or in addition, the same principle is also applicable on the at least one braking member.

In some embodiments, the at least one brake member portion and/or the at least one braking member are/is formed as segment. Further, the at least one brake member comprises a plurality of brake member portion segments arranged on the radial surface of the at least one brake member in a circumferential direction around the rotational axis, and/or a plurality of braking member segments are arranged in the circumferential direction around the rotational axis.

Accordingly, the segment of the at least one brake member portion and/or of the at least one braking member may form at least one portion of the closed ring as described above. However, the segment may also be formed in another shape to provide a contact surface for the frictional pairing. Alternatively, to the arrangement of a plurality of segments, only one segment may be provided depending on the size and required braking ability.

In some embodiments, the at least one brake member portion or the at least one braking member are/is formed as a closed ring, while the respective other frictional pairing partner, i.e. the at least one braking member or the at least one brake member portion, is formed by at least one segment.

Preferably, the plurality of brake member portion segments and/or the plurality of braking member segments are non-symmetrically arranged in the circumferential direction around the rotational axis.

Due to the non-symmetrical arrangement around the rotational axis, brake noise, vibrations and/or harshness issues may be avoided or at least reduced.

In some embodiments, the at least one brake member comprises at least one axial brake member opening extending in the axial direction with respect to the rotational axis through the radial surface sides of the at least one brake member. Alternatively or in addition, in the event of the previously described brake assembly comprising at least one first brake member and at least one second brake member, the brake member assembly comprises a connecting member extending in the circumferential direction around the rotational axis to connect the at least one first brake member and the at least one second brake member, wherein the connecting member comprises at least one radial brake member opening extending in the radial direction with respect to the rotational axis through the connecting member.

The at least one axial brake member opening allows the accessibility of components inside the brake assembly from an axial side with respect to the rotational axis via the at least one brake member. Preferably, the at least one axial window is at least sized to allow such access by a respective tool and/or for manual operations. Alternatively or in addition, the axial brake member opening may be sized to allow a component to be exchanges via the axial brake member opening. A plurality of axial brake member openings may be provided to allow access to different locations around the rotational axis without or only limited requirement to rotate the brake member in a respective position.

The at least one radial brake opening allows the accessibility of components within the brake assembly in a radial direction with respect to the rotational axis. The above configurations of the at least one axial brake member opening are also applicable on the at least one radial brake member opening but with respect to another access direction.

In some embodiments, the at least one brake member portion is formed as a separate member connectable to the at least one brake member, preferably by at least one brake member connecting member.

Therefore, the exchange of the at least one brake member portion may be possible without exchanging the whole brake member. This may reduce the material consumption in the event of an exchange. In particular, in the event of more than one brake member portion, the brake member portion or brake member portions may be individually exchanged upon demand. Further, since the at least one brake member portion, or, in general, the brake member, is the main wear component to be exchanged due to wear instead of the respective braking member, the braking member is less often subject to such exchange. Accordingly, any dissembling of the braking member is avoided or at least reduced in numbers, which may otherwise may cause a collapsing of the complex actuator mechanism. In such event, smaller components may fall out or get lost, such as balls, springs or the like. Even though this may be avoided by the use of control splines of the actuator mechanism, manufacturing of these splines is expensive, and the surface durability demands raw material with higher load capability, which also increases costs.

The at least one brake member connecting member may be integrally formed with the brake member portion or a separate connecting member provided individually or by the brake member. In other words, the brake member may form a main brake member body with the at least one brake member portion connectable thereto, e.g. by a form-fit and/or force fit connection. For example, the connecting member may provide a snap-fit connection to easily connect the at least one brake member portion to the brake member or brake member body, respectively.

Preferably, the at least one brake member portion is connected to the brake member such that the contact surface for the frictional pairing provided by the at least one brake member portion projects from the brake member in the axial direction towards the at least one braking member. Thus, the brake member portion may provide the first frictional contact to ensure the desired frictional pairing of the brake member portion and the braking member.

Preferably, the at least one brake member portion is received within or at least covers the at least one axial brake member opening as previously described.

Accordingly, the at least one axial brake member opening may be configured to attach the at least one bake member portion to the brake member and/or to allow accessibility as described above. In particular with respect to a configuration of the at least one axial braking members for a respective attachment of the at least one brake member portion and for allowing accessibility to further components, the further components may be checked upon an exchange of the at least one brake member portion. The exchange of the at least one brake member portion may also be supported via the at least one radial brake member opening.

If the at least one brake member portion is received in the respective axial brake member opening without significant gap or is covering the axial brake member opening, the axial brake member opening may be substantially closed by the brake member portion. Thus, the frictional pairing may be substantially encapsulated by the brake member assembly or brake assembly to avoid or at least reduce brake dust emission.

In some embodiments, the at least one brake member portion comprises at least one heat conducting portion, preferably at least formed by the at least one brake member connecting member. The at least one heat conducting portion is configured to increase the heat transfer from the at least one brake member portion to the adjacent brake member area.

The at least one heat conducting portion is configured and arranged to improve the temperature flux from the contact surface for the frictional pairing to the brake member body. A heat accumulation at the contact surface or the brake member portion, respectively, may thereby be avoided or at least reduced.

In some embodiments, the at least one braking member is connected to the actuator mechanism and/or a carrier member, preferably based on a force- fit and/or form-fit connection, in particular based on a click-in connection.

For example, the at least one braking member may be "clicked" in an interface of the actuator mechanism by a snap-fit connector configuration or the like. A form-fit and/or force-fit connection may decrease service efforts due to such flexible, in particular, reversible connection.

Preferably, the brake assembly and/or the at least one braking member comprises a braking member isolating portion arranged between the portion of the at least one braking member intended for the friction pairing with the at least one brake member brake portion and the connection to the actuator mechanism and/or a carrier member.

The braking member isolating portion may avoid or at least reduce overheating of a guidance of the carrier member for the at least one braking member in the axial direction with respect to the rotational axis, and/or the actuator mechanism the at least one braking member may be attached to or in operative connection. Alternatively or in addition, the isolating portion may be configured as mechanical separation between the actuator mechanism and the respective braking member. Accordingly, even if the respective braking member is subject to an exchange, the braking member may be removed from isolating portion, which may be kept in constant positional relationship with respect to the actuator mechanism to avoid collapsing of the actuator mechansim.

In another aspect, the present invention relates to a vehicle comprising a brake assembly as previously described, wherein the vehicle is a commercial vehicle and/or an electrically powered or hybrid vehicle.

For example, the commercial vehicle may be a truck, a trailer, a bus and/or a combination of a towing vehicle and a trailer. Commercial vehicles are particularly associated with comparably larger and heavier components. Accordingly, the use of the brake assembly as previously described for commercial vehicles allows the labor efforts for an exchange of wear parts with respect to the frictional pairing of brake members and braking members to be reduced. Further, in the event of electrically powered or hybrid vehicles, the installation space for a brake assembly may be further reduced, which may also affect labor efforts for exchanging respective wear parts. The use of the previously described brake assembly may therefore also contribute to a reduction in such labor efforts, specifically in the event of improving accessibility.

Further advantages, aspects and details of the invention are subject to the appended claims, the following description of exemplary embodiments applying the principles of the invention, and the respective exemplary drawings.
**Figure 1** is a cross-sectional view of a section of a brake assembly according to an exemplary embodiment of the present invention;
**Figure 2** is a front view of a brake member assembly according to Figure 1;
**Figure 3** is a top view of a brake member assembly according to Figure 1; and
**Figure 4** is a front view of a brake member portion according to Figures 1 and 2.

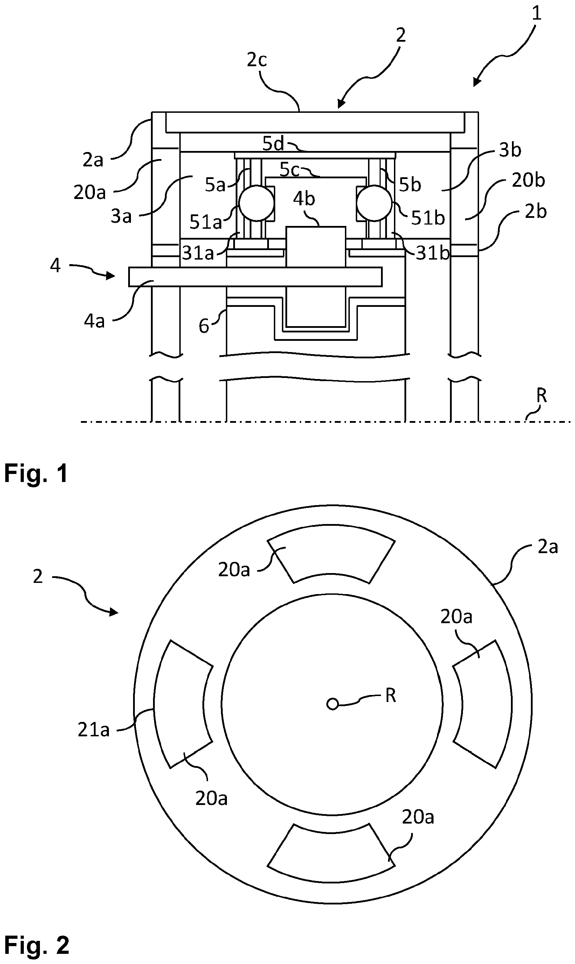

**Figure 1** shows a cross-sectional view of a section of a brake assembly 1 according to an exemplary embodiment of the present invention. The exemplary brake assembly 1 comprises a brake member assembly 2 configured as brake disc assembly, comprising a first brake member 2a, here, a first brake disc, and a second brake member 2b, here, a second brake disc. The first brake member 2a and the second brake member 2b are rotationally supported about a rotational axis R and connected to each other by a connecting member 2c to rotate together about the rotational axis R. In the exemplary embodiment, the connecting member 2c is a ring-shaped member circumferentially extending around the outer circumference of the first brake member 2a and second brake member 2b in a space therebetween in the axial direction with respect to rotational axis R. Accordingly, the connecting member 2c provides an outer circumferential cover of the brake member assembly 2 capable of stiffening the brake member assembly 2 and/or protecting components between the first brake member 2a and the second brake member 2b from environmental impacts from outside due to the coverage by the first brake member 2a, the second brake member 2b and the connecting member 2c. However, in other embodiments, connecting member may be comprised of a plurality of separate connecting members. In other embodiments, the connecting member 2c may, alternatively or in addition, be arranged at an inner circumference of the first brake member 2a and the second brake member 2b. The connecting member 2c is connected to the first brake member 2a and the second brake member 2b by being firmly bonded thereto. In alternative embodiments, the connecting member 2c may be connected to the first brake member 2a and the second brake member 2b by a force-fit connection or may be integrally formed with the first brake member 2a and/or the second brake member 2b.

The first brake member 2a comprises a plurality of brake member portions 20a (cf. also Fig. 2), arranged around the rotational axis R with respective contact surfaces for a frictional pairing in the event of a braking action extending on a radial surface side of the first brake member 2a facing towards the inner space between the first brake member 2a and the second brake member 2b. Analogously, the second brake member 2b comprises a plurality of brake member portions 20b, arranged around the rotational axis R with respective contact surfaces for a frictional pairing in the event of a braking action extending on a radial surface side of the second brake member 2b facing towards the inner space between the first brake member 2a and the second brake member 2b.

The brake assembly 1 further comprises a first braking member 3a assigned to the first brake member 2a or first brake member portions 20a, respectively, to apply a braking force thereon, and a second braking member 3b assigned to the second brake member 2b or second brake member portions 20b, respectively, to apply a braking force thereon. Each of the first and second braking members 3a, 3b is arranged to provide a contact surface as braking surface extending in a radial direction with respect to the rotational axis R and facing an inner radial surface of the respective first and second brake members 2a, 2b respectively assigned thereto. In the exemplary embodiment, the first and second braking members 3a, 3b are stationary with respect to rotational movement relative to the first and second brake members 2a, 2b, but axially moveable with respect to the rotational axis R. Accordingly, when the first braking member 3a is axially moved towards the first brake member 2a, after an initial contact with at least one of the respectively arranged first brake member portions, the first braking member 3a applies a braking force on the first brake member portion 20a and therefore the first brake member 2a. In turn, when the first braking member 3a is axially moved away from the first brake member 2a, an applied braking force is released. The same applies for the second braking member 3b with respect to the second brake member 2b. In the exemplary embodiment, the first and second braking members 3a, 3b are configured as closed ring member extending over the whole circumference of the first brake member 2a and/or the second brake member 2b, here, for example, coaxially to the rotational axis R. However, in alternative embodiments, the first braking member 3a and/or the second braking 3b may be configured to only partially extend over a circumferential direction with respect to the rotational axis R in one or by several distinct segments.

To apply a braking force on the first and second brake members 2a, 2b due to an axial movement of the first and second braking members 3a, 3b, the brake assembly 1 comprises an actuator mechanism. The actuator mechanism in the exemplary embodiment comprises a first actuator 5a, here, a first ball retainer, with a first actuator driving member 51a, here a first ball retained in the first ball retainer, second actuator 5b, here, a second ball retainer, with a second actuator driving member 51b, here a second ball retained in the second ball retainer, and an actuator transmission member 5c arranged between the first actuator 5a and the second actuator 5b in the axial direction with respect to the rotational axis R. The actuator transmission member 5c provides a first ball track on a radial surface facing the ball 51a and a second ball track on a radial surface facing the ball 51b. The first actuator 5a, the second actuator 5b and the actuator transmission member 5c are ring-shaped and extend around the rotational axis R coaxially thereto. Due to the annular arrangement, the first actuator 5a and/or the second actuator 5b may also comprise a plurality of respective first and second actuator driving members 51a, 51b. Accordingly, the actuator transmission member 5c may provide a respective length of the first and second ball tracks in the circumferential direction or may provide a respective plurality of first and second ball tracks. In the exemplary embodiment, the actuator transmission member 5c provides a ball-ramp mechanism with the actuator transmission member 5c being rotationally driven about the rotational axis R to move the first ball 51a and the second ball 51b in the axial direction in accordance with the actual depth of the respective ball track in the axial direction. Accordingly, the first ball 51a and the second ball 51b are retained in respectively stationary first and second ball retainers 5a, 5b with respect to a rotational movement. The first ball 51a and the second ball 51b are retained in the first and second ball retainers 5a, 5b to be movable in the axial direction. In other embodiments, the axial movement of the first and second balls 51a, 51b may, alternatively or in addition, be provided by the respective first and/or second ball retainers 5a, 5b being axially moveable.

To drive the actuator transmission member 5c to move the first and second braking members 3a, 3b in the axial direction towards the respectively assigned first and second brake members 2a, 2b or the first and second brake member portions 20a, 20b, respectively, the brake assembly 1 further comprises a driving mechanism 4. The driving mechanism 4 comprises a driving member 4a extending in the axial direction in parallel to the rotational axis R from an outside of the brake member assembly 2, here from an outside of the radial surface of the first brake member 2a facing away from the second brake member 2b, into the axial space provided between the first brake member 2a and the second brake member 2b. However, in alternative embodiments, the driving member 4a may extend with an inclination angle with respect to the rotational axis with an extension component in the axial direction. The driving member 4a comprises a transmission member 4b, here, a spur gear extending circumferentially in the radial direction with the teeth arranged on the outer circumference of the spur gear, i.e. on a circumferential axial surface thereof. The transmission member 4b is arranged at a portion of the driving member 4a extending inside the brake member assembly 2, i.e. in the space between the first brake member 2a and the second brake member 2b. The transmission member 4b is thereby positioned such that the teeth of the spur gear mesh with corresponding teeth of the actuator transmission member 5c facing the teeth of the spur gear. Consequently, the actuator transmission member 5c is rotated about the rotational axis R, if driven by the transmission member 4b due to a rotational movement of the driving member 4a.

The driving member 4a comprising the transmission member 4b is rotatably supported within a carrier member 6 partially enclosing the driving member 4a and the transmission member 4b in the axial direction with an opening to allow the transmission member 4b to drive the actuator transmission member 5c. To protect the transmission member 4b, the actuator transmission member 5c and the first and second actuators 5a, 5b from environmental impacts, such as brake dust or the like, the brake assembly 1 comprises an actuator protection portion 5d. The actuator protection portion 5d is a ring member with its circumferential extension arranged between the first braking member 3a and the second braking member 3b in the axial direction.

To avoid or at least reduce a heat transfer from the first braking member 3a to the first actuator 5a, the first braking member 3a comprises a first braking member isolating portion 31a in a contact area of the first braking member 3a with the first actuator 5a. Analogously, the second braking member 3b comprises a second braking member isolating portion 31b in a contact area of the second braking member 3b with the second actuator 5b.

According to the above configuration of the brake assembly, the first and second brake member portions 20a, 20b are arranged on radial surface sides of the brake member assembly 2, while the first and second braking members 3a, 3b are arranged inside the brake member assembly 2 in the axial space between the first and the second brake members 2a, 2b. In such configuration, the first and second brake member portions 20a, 20b provide a contact surface for a frictional pairing with the respective first and second braking members 3a, 3b upon a braking operation, which provides a material up to a certain thickness in the axial direction with a higher wear rate than the wear rate of the respective first and second braking members. Since the first and second brake member portions 20a, 20b may therefore be subject to more frequent exchanges, the external arrangement allows easier access and may thereby reduce labor efforts.

**Figure 2** shows a front view of the brake member assembly 2 according to Figure 1. According to the exemplary embodiment of the brake member assembly 2, the first brake member 2a comprises four brake member portions 20a and respective axial brake member openings 21a to receive the first brake member portions 20a formed as individual segments in the each of the axial brake member openings 21a. However, in alternative embodiments, the number of axial brake member openings 21a and/or first brake member portions 20a may be more or less than 4. Further, the number of axial brake member openings 21a may not be equal to the number of brake member portions 20a. The configuration of the second brake member 2b (not shown in Fig. 2) corresponds to the configuration of the first brake member 2a.

The axial brake member openings 21 in the first brake member 2a allow an easy exchange of the first brake member portions 20a. Further, by detaching at least one of the first brake member portions 20a from the first brake member 2a, the respective axial brake member opening provides access to the inside of the brake member assembly 2, e.g. to inspect the first braking member 3a or the like.

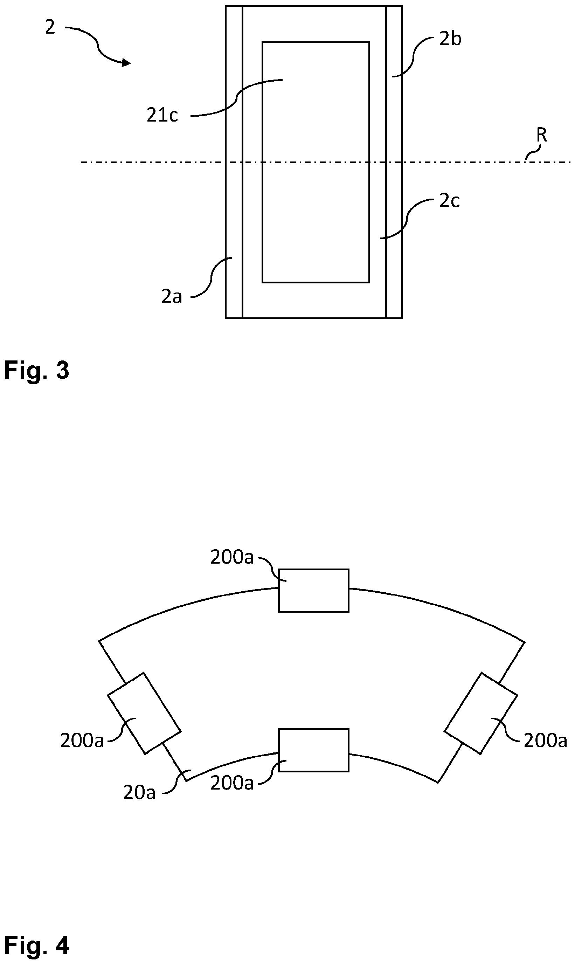

**Figure 3** shows a top view of the brake member assembly 2 according to Figure 1. As apparent from the top view, the connecting member 2c of the brake member assembly 2 comprises a radial brake member opening 21c to allow to access the inside of the brake member assembly 2 in the radial direction with respect to the rotational axis R. Similarly to the axial access, the radial access may allow the first and/or second braking members 3a, 3b or other parts in the axial space between the first and second braking member 2a, 2b to be inspected, or may allow to support the attachment or detachments of the first and/or second brake member portions to or from the axial brake member openings 21a.

**Figure 4** is a front view of a brake member portion according to Figures 1 and 2, here, a first brake member portion 20a. The first brake member portion 20a comprises four brake member connecting members 200a to connect the first brake member portion 20a to the first brake member 2a. The connecting portions are configured as snap-fit brake member connecting member 200a, each position on one lateral side of the first brake member portion 20a forming the surface opposed to the contact surface for the frictional pairing with the first braking member 3a. Accordingly, the frictional pairing is not disturbed by the brake member connecting members 200a. However, in alternative embodiments, the arrangement of the brake member connecting members 200a may be different, e.g. on another side, and/or the number of brake member connecting members 200a may be more or less than four. In alternative embodiments, the brake member connecting members 200a may provide another configuration than a snap-fit configuration. In general, brake member connecting members 200a, which are configured to be strong enough for tolerating the clamping force are preferred. The brake member connecting members 200a may comprise further support surfaces to increase the tolerance for loads. The connecting mechanism by the brake member connecting members 200a may be based on form-fit and/or force-fit principles. The number of brake member connecting members 200a may be less or more than four.

The invention has been described with respect to an exemplary embodiments. However, the invention is not limited to the exemplary embodiments. In particular, even though the brake assembly 1 of the exemplary embodiments comprises four first brake member portions 20a, the number of first brake portions 20a may be more or less than four. Further, the number of first brake portions 20a is equal to the number of second brake portions in the exemplary embodiment. However, the number of second brake portions 20b may be different from the number of first brake portions 20a in other embodiments. As another modification, the isolating portions 31a, 31b may, alternatively or in addition, be provided as separate from the respective braking members 3a, 3b to allow the actuator mechanism 5a, 5b, 5c, 5d to be fixed by the isolating portions 31a, 31b to avoid any loosening of parts thereof.

### LIST OF REFERENCE SIGNS

- 1: brake assembly
- 2: brake member assembly
- 2a: first brake member
- 2b: second brake member
- 2c: connecting member
- 3a: first braking member
- 3b: second braking member
- 4: driving mechanism
- 4a: driving member
- 4b: transmission member
- 5a: first actuator
- 5b: second actuator
- 5c: actuator transmission member
- 5d: actuator protection portion
- 6: carrier member
- 20a: first brake member portion
- 20b: second brake member portion
- 21a: axial brake member opening
- 21c: radial brake member opening
- 31a: first braking member isolation portion
- 31b: second braking member isolating portion
- 51a: first actuator driving member
- 51b: second actuator driving member
- 200a: brake member connecting member
- R: rotational axis

## Claims

1. Brake assembly (1) for braking a wheel of a vehicle, comprising:
a brake member assembly (2) comprising at least one brake member (2a, 2b) configured to rotate about a rotational axis (R),
at least one braking member (3a, 3b) arranged on a radial surface side of the at least one brake member (2a, 2b) with respect to the rotational axis (R), wherein the at least one braking member (3a, 3b) is axially movable with respect to the rotational axis (R), and
an actuator mechanism (5a, 5b, 5c, 5d) configured to move the at least one braking member (3a, 3b) in the axial direction towards the at least one brake member (2a, 2b) to apply a braking force on the radial surface of the at least one brake member (2a, 2b),
wherein the at least one brake member (2a, 2b) provides at least one brake member portion (20a, 20b) arranged and configured to provide a contact surface on the radial surface side of the at least one brake member (2a, 2b) for the at least one braking member (3a, 3b) to form a frictional pairing with the at least one braking member (3a, 3b) upon contact, and
**characterised in that**, a wear rate of a material of the at least one brake member portion (20a, 20b) intended for the frictional pairing is higher than a wear rate a material of the at least one braking member (3a, 3b) intended for the frictional pairing.

2. The brake assembly (1) according to claim 1, wherein
the brake member assembly (2) comprises at least one first brake member (2a) and at least one second brake member (2b) opposed to each other in the axial direction with respect to the rotational axis (R), and
the brake assembly (1) comprises at least one first braking member (3a) and at least one second braking member (3b) opposed to each other in the axial direction with respect to the rotational axis (R), wherein the at least one first braking member (3a) is configured to apply a braking force on the first brake member (2a) and the at least one second braking member (3b) is configured to apply a braking force on the second brake member (2b),
wherein the at least one first braking member (3a) and the at least one second braking member (3b) are arranged between the at least one first brake member (2a) and the at least one second member (2b) in the axial direction with respect to the rotational axis (R).

3. The brake assembly (1) according to claim 2, wherein
a wear volume of the at least one first brake member portion (20a) differs from a wear volume of the at least one second brake member portion (20b), and/or
a wear volume of the at least one first braking member (3a) differs from a wear volume of the at least one second braking member (3b).

4. The brake assembly (1) according to any one of the preceding claims, wherein
at least the portion of the at least one braking member (3a, 3b) intended for the frictional pairing with the at least one brake member portion (20a, 20b) is made of metal, preferably of an iron cast, ceramic, composite compounds or a sandwich of different materials.

5. The brake assembly (1) according to any one of the preceding claims, wherein
the at least one brake member portion (20a, 20b) and/or the at least one braking member (3a, 3b) are/is formed as closed ring extending around the rotational axis (R).

6. The brake assembly (1) according to any one of the claims 1 to 4, wherein
the at least one brake member portion (20a, 20b) and/or the at least one braking member (3a, 3b) are/is formed as segment, and wherein
the at least one brake member (2a, 2b) comprises a plurality of brake member portion segments arranged on the radial surface of the at least one brake member (2a, 2b) in a circumferential direction around the rotational axis (R), and/or a plurality of braking member segments are arranged in the circumferential direction around the rotational axis (R).

7. The brake assembly (1) according to claim 6, wherein
the plurality of brake member portion segments and/or the plurality of braking member segments are non-symmetrically arranged in the circumferential direction around the rotational axis (R).

8. The brake assembly (1) according to any one of the preceding claims, wherein
the at least one brake member (2a, 2b) comprises at least one axial brake member opening (21a) extending in the axial direction with respect to the rotational axis (R) through the radial surface sides of the at least one brake member (2a,2b), and/or wherein
the brake member assembly (2) according to claim 2 or 3 comprises a connecting member (2c) extending in the circumferential direction around the rotational axis (R) to connect the at least one first brake member (2a) and the at least one second brake member (2b), wherein the connecting member (2c) comprises at least one radial brake member opening (21c) extending in the radial direction with respect to the rotational axis (R) through the connecting member (2c).

9. The brake assembly (1) according to any one of the preceding claims, wherein
the at least one brake member portion (20a, 20b) is formed as a separate member connectable to the at least one brake member (2a, 2b), preferably by at least one brake member connecting member (200a).

10. The brake assembly (1) according to claim 9, wherein
the at least one brake member portion (20a, 20b) is received within or at least covers the at least one axial brake member opening (21a) according to claim 8.

11. The brake assembly (1) according to any one of the preceding claims, wherein
the at least one brake member portion (20a, 20b) comprises at least one heat conducting portion, preferably at least formed by the at least one brake member connecting member (200a) according to claim 9, configured to increase the heat transfer from the at least one brake member portion (20a, 20b) to the adjacent brake member area.

12. The brake assembly (1) according to any one of the preceding claims, wherein
the at least one braking member (3a, 3b) is connected to the actuator mechanism (5a, 5b, 5c, 5d) and/or a carrier member (6), preferably based on a force- fit and/or form-fit connection, in particular based on a click-in connection.

13. The brake assembly (1) according to claim 12, wherein
the brake assembly (1) and/or the at least one braking member (3a, 3b) comprises a braking member isolating portion (31a, 31b) arranged between the portion of the at least one braking member (3a, 3b) intended for the friction pairing with the at least one brake member brake portion (20a, 20b) and the connection to the actuator mechanism (5a, 5b, 5c, 5d) and/or a carrier member (6).

14. Vehicle comprising a brake assembly (1) according to one of the claims 1 to 13, wherein the vehicle is a commercial vehicle and/or an electrically powered or hybrid vehicle.

## Patentansprüche

1. Bremsanordnung (1) zum Bremsen eines Rades eines Fahrzeugs, umfassend:
eine Bremselementanordnung (2), die mindestens ein Bremselement (2a, 2b) umfasst, das so konfiguriert ist, dass es sich um eine Drehachse (R) dreht,
mindestens ein Bremselement (3a, 3b), das in Bezug auf die Drehachse (R) auf einer radialen Flächenseite des mindestens einen Bremselements (2a, 2b) angeordnet ist, wobei das mindestens eine Bremselement (3a, 3b) in Bezug auf die Drehachse (R) axial beweglich ist, und
einen Betätigungsmechanismus (5a, 5b, 5c, 5d), der so konfiguriert ist, dass er das mindestens eine Bremselement (3a, 3b) in der axialen Richtung zu dem mindestens einen Bremselement (2a, 2b) hin bewegt, um eine Bremskraft auf die radiale Fläche des mindestens einen Bremselements (2a, 2b) auszuüben,
wobei das mindestens eine Bremselement (2a, 2b) mindestens einen Bremselementabschnitt (20a, 20b) bereitstellt, der so angeordnet und konfiguriert ist, dass er auf der radialen Flächenseite des mindestens einen Bremselements (2a, 2b) eine Kontaktfläche für das mindestens eine Bremselement (3a, 3b) bereitstellt, um bei Kontakt eine Reibpaarung mit dem mindestens einen Bremselement (3a, 3b) zu bilden, und
**dadurch gekennzeichnet, dass** eine Verschleißrate eines Materials des mindestens einen Bremselementabschnitts (20a, 20b), der für die Reibpaarung gedacht ist, höher ist als eine Verschleißrate eines Materials des mindestens einen Bremselements (3a, 3b), das für die Reibpaarung gedacht ist.

2. Bremsanordnung (1) nach Anspruch 1, wobei
die Bremselementanordnung (2) mindestens ein erstes Bremselement (2a) und mindestens ein zweites Bremselement (2b) umfasst, die einander in der axialen Richtung in Bezug auf die Drehachse (R) gegenüberliegen, und
die Bremsanordnung (1) mindestens ein erstes Bremselement (3a) und mindestens ein zweites Bremselement (3b) umfasst, die einander in der axialen Richtung in Bezug auf die Drehachse (R) gegenüberliegen, wobei das mindestens eine erste Bremselement (3a) so konfiguriert ist, dass es eine Bremskraft auf das erste Bremselement (2a) ausübt, und das mindestens eine zweite Bremselement (3b) so konfiguriert ist, dass es eine Bremskraft auf das zweite Bremselement (2b) ausübt,
wobei das mindestens eine erste Bremselement (3a) und das mindestens eine zweite Bremselement (3b) in der axialen Richtung in Bezug auf die Drehachse (R) zwischen dem mindestens einen ersten Bremselement (2a) und dem mindestens einen zweiten Element (2b) angeordnet sind.

3. Bremsanordnung (1) nach Anspruch 2, wobei
sich ein Verschleißvolumen des mindestens einen ersten Bremselementabschnitts (20a) von einem Verschleißvolumen des mindestens einen zweiten Bremselementabschnitts (20b) unterscheidet, und/oder
sich ein Verschleißvolumen des mindestens einen ersten Bremselements (3a) von einem Verschleißvolumen des mindestens einen zweiten Bremselements (3b) unterscheidet.

4. Bremsanordnung (1) nach einem der vorstehenden Ansprüche, wobei
mindestens der Abschnitt des mindestens einen Bremselements (3a, 3b), der für die Reibpaarung mit dem mindestens einen Bremselementabschnitt (20a, 20b) gedacht ist, aus Metall, bevorzugt aus einem Eisenguss, Keramik, Verbundverbindungen oder aus einer Schichtung unterschiedlicher Materialien hergestellt ist.

5. Bremsanordnung (1) nach einem der vorstehenden Ansprüche, wobei
der mindestens eine Bremselementabschnitt (20a, 20b) und/oder das mindestens eine Bremselement (3a, 3b) als geschlossener Ring, der sich um die Drehachse (R) herum erstreckt, gebildet sind/ist.

6. Bremsanordnung (1) nach einem der Ansprüche 1 bis 4, wobei
der mindestens eine Bremselementabschnitt (20a, 20b) und/oder das mindestens eine Bremselement (3a, 3b) als Segment gebildet sind/ist, und wobei
das mindestens eine Bremselement (2a, 2b) eine Vielzahl von Bremselementabschnittssegmenten umfasst, die auf der radialen Fläche des mindestens einen Bremselements (2a, 2b) in einer Umfangsrichtung um die Drehachse (R) herum angeordnet sind, und/oder eine Vielzahl von Bremselementsegmenten in der Umfangsrichtung um die Drehachse (R) herum angeordnet sind.

7. Bremsanordnung (1) nach Anspruch 6, wobei
die Vielzahl von Bremselementabschnittssegmenten und/oder die Vielzahl von Bremselementsegmenten in der Umfangsrichtung um die Drehachse (R) herum unsymmetrisch angeordnet sind.

8. Bremsanordnung (1) nach einem der vorstehenden Ansprüche, wobei
das mindestens eine Bremselement (2a, 2b) mindestens eine axiale Bremselementöffnung (21a) umfasst, die sich in der axialen Richtung in Bezug auf die Drehachse (R) durch die radialen Flächenseiten des mindestens einen Bremselements (2a, 2b) erstreckt, und/oder wobei
die Bremselementanordnung (2) nach Anspruch 2 oder 3 ein Verbindungselement (2c) umfasst, das sich in der Umfangsrichtung um die Drehachse (R) herum erstreckt, um das mindestens eine erste Bremselement (2a) und das mindestens eine zweite Bremselement (2b) zu verbinden, wobei das Verbindungselement (2c) mindestens eine radiale Bremselementöffnung (21c) umfasst, die sich in der radialen Richtung in Bezug auf die Drehachse (R) durch das Verbindungselement (2c) erstreckt.

9. Bremsanordnung (1) nach einem der vorstehenden Ansprüche, wobei
der mindestens eine Bremselementabschnitt (20a, 20b) als separates Element gebildet ist, das mit dem mindestens einen Bremselement (2a, 2b), bevorzugt über mindestens ein Bremselement-Verbindungselement (200a), verbunden werden kann.

10. Bremsanordnung (1) nach Anspruch 9, wobei
der mindestens eine Bremselementabschnitt (20a, 20b) innerhalb der mindestens einen axialen Bremselementöffnung (21a) nach Anspruch 8 aufgenommen ist oder diese mindestens abdeckt.

11. Bremsanordnung (1) nach einem der vorstehenden Ansprüche, wobei
der mindestens eine Bremselementabschnitt (20a, 20b) mindestens einen wärmeleitenden Abschnitt umfasst, der bevorzugt mindestens von dem mindestens einem Bremselement-Verbindungselement (200a) nach Anspruch 9 gebildet wird, der so konfiguriert ist, dass er die Wärmeübertragung von dem mindestens einen Bremselementabschnitt (20a, 20b) zum angrenzenden Bremselementbereich erhöht.

12. Bremsanordnung (1) nach einem der vorstehenden Ansprüche, wobei
das mindestens eine Bremselement (3a, 3b) mit dem Betätigungsmechanismus (5a, 5b, 5c, 5d) und/oder einem Trägerelement (6), bevorzugt auf Basis einer Kraftschluss- und/oder Formschlussverbindung, insbesondere auf Basis einer Klick-Verbindung, verbunden ist.

13. Bremsanordnung (1) nach Anspruch 12, wobei
die Bremsanordnung (1) und/oder das mindestens eine Bremselement (3a, 3b) einen Bremselement-Isolierabschnitt (31a, 31b) umfasst, der zwischen dem Abschnitt des mindestens einen Bremselements (3a, 3b), der für die Reibpaarung mit dem mindestens einen Bremselement-Bremsabschnitt (20a, 20b) gedacht ist, und der Verbindung zum Betätigungsmechanismus (5a, 5b, 5c, 5d) und/oder einem Trägerelement (6) angeordnet ist.

14. Fahrzeug, das eine Bremsanordnung (1) nach einem der Ansprüche 1 bis 13 umfasst, wobei das Fahrzeug ein Nutzfahrzeug und/oder ein elektrisch angetriebenes oder Hybridfahrzeug ist.

## Revendications

1. Ensemble frein (1) pour freiner une roue d'un véhicule, comprenant :
un ensemble élément de frein (2) comprenant au moins un élément de frein (2a, 2b) configuré pour tourner autour d'un axe de rotation (R),
au moins un élément de freinage (3a, 3b) agencé sur un côté de surface radiale du au moins un élément de frein (2a, 2b) par rapport à l'axe de rotation (R), dans lequel le au moins un élément de freinage (3a, 3b) est mobile axialement par rapport à l'axe de rotation (R), et
un mécanisme d'actionnement (5a, 5b, 5c, 5d) configuré pour déplacer le au moins un élément de freinage (3a, 3b) dans la direction axiale vers le au moins un élément de frein (2a, 2b) pour appliquer une force de freinage sur la surface radiale du au moins un élément de frein (2a, 2b),
dans lequel le au moins un élément de frein (2a, 2b) fournit au moins une partie d'élément de frein (20a, 20b) agencée et configurée pour fournir une surface de contact sur le côté de surface radiale du au moins un élément de frein (2a, 2b) pour que le au moins un élément de freinage (3a, 3b) forme un appariement par frottement avec le au moins un élément de freinage (3a, 3b) lors du contact, et
**caractérisé en ce qu'**un taux d'usure d'un matériau de la au moins une partie d'élément de frein (20a, 20b) destinée à l'appariement par frottement est supérieur à un taux d'usure d'un matériau du au moins un élément de freinage (3a, 3b) destiné à l'appariement par frottement.

2. Ensemble frein (1) selon la revendication 1, dans lequel
l'ensemble élément de frein (2) comprend au moins un premier élément de frein (2a) et au moins un second élément de frein (2b) opposés l'un à l'autre dans la direction axiale par rapport à l'axe de rotation (R), et
l'ensemble frein (1) comprend au moins un premier élément de freinage (3a) et au moins un second élément de freinage (3b) opposés l'un à l'autre dans la direction axiale par rapport à l'axe de rotation (R), dans lequel le au moins un premier élément de freinage (3a) est configuré pour appliquer une force de freinage sur le premier élément de frein (2a) et le au moins un second élément de freinage (3b) est configuré pour appliquer une force de freinage sur le second élément de frein (2b),
dans lequel le au moins un premier élément de freinage (3a) et le au moins un second élément de freinage (3b) sont agencés entre le au moins un premier élément de frein (2a) et le au moins un second élément (2b) dans la direction axiale par rapport à l'axe de rotation (R).

3. Ensemble frein (1) selon la revendication 2, dans lequel
un volume d'usure de la au moins une première partie d'élément de frein (20a) diffère d'un volume d'usure de la au moins une seconde partie d'élément de frein (20b), et/ou
un volume d'usure du au moins un premier élément de freinage (3a) diffère d'un volume d'usure du au moins un second élément de freinage (3b).

4. Ensemble frein (1) selon l'une quelconque des revendications précédentes, dans lequel
au moins la partie du au moins un élément de freinage (3a, 3b) destinée à l'appariement par frottement avec la au moins une partie d'élément de frein (20a, 20b) est réalisée en métal, de préférence en fonte, en céramique, en composés composites ou en un sandwich de différents matériaux.

5. Ensemble frein (1) selon l'une quelconque des revendications précédentes, dans lequel
la au moins une partie d'élément de frein (20a, 20b) et/ou le au moins un élément de freinage (3a, 3b) est/sont formé(s) comme un anneau fermé s'étendant autour de l'axe de rotation (R).

6. Ensemble frein (1) selon l'une quelconque des revendications 1 à 4, dans lequel
la au moins une partie d'élément de frein (20a, 20b) et/ou le au moins un élément de freinage (3a, 3b) est/sont formé(s) comme un segment, et dans lequel
le au moins un élément de frein (2a, 2b) comprend une pluralité de segments de partie d'élément de frein agencés sur la surface radiale du au moins un élément de frein (2a, 2b) dans une direction circonférentielle autour de l'axe de rotation (R), et/ou une pluralité de segments d'éléments de freinage sont agencés dans la direction circonférentielle autour de l'axe de rotation (R).

7. Ensemble frein (1) selon la revendication 6, dans lequel
la pluralité de segments de parties d'élément de frein et/ou la pluralité de segments d'éléments de freinage sont agencés de manière non symétrique dans la direction circonférentielle autour de l'axe de rotation (R).

8. Ensemble frein (1) selon l'une quelconque des revendications précédentes, dans lequel
le au moins un élément de frein (2a, 2b) comprend au moins une ouverture d'élément de frein axiale (21a) s'étendant dans la direction axiale par rapport à l'axe de rotation (R) à travers les côtés de surface radiale du au moins un élément de frein (2a, 2b), et/ou dans lequel
l'ensemble d'élément de frein (2) selon la revendication 2 ou 3 comprend un élément de liaison (2c) s'étendant dans la direction circonférentielle autour de l'axe de rotation (R) pour relier le au moins un premier élément de frein (2a) et le au moins un second élément de frein (2b), dans lequel l'élément de liaison (2c) comprend au moins une ouverture d'élément de frein radiale (21c) s'étendant dans la direction radiale par rapport à l'axe de rotation (R) à travers l'élément de liaison (2c).

9. Ensemble frein (1) selon l'une quelconque des revendications précédentes, dans lequel
la au moins une partie d'élément de frein (20a, 20b) est formée comme un élément séparé pouvant être connecté au au moins un élément de frein (2a, 2b), de préférence par au moins un élément de liaison d'élément de frein (200a).

10. Ensemble frein (1) selon la revendication 9, dans lequel
la au moins une partie d'élément de frein (20a, 20b) est reçue à l'intérieur ou recouvre au moins la au moins une ouverture d'élément de frein axiale (21a) selon la revendication 8.

11. Ensemble frein (1) selon l'une quelconque des revendications précédentes, dans lequel
la au moins une partie d'élément de frein (20a, 20b) comprend au moins une partie conductrice de chaleur, de préférence au moins formée par le au moins un élément de liaison d'élément de frein (200a) selon la revendication 9, configurée pour augmenter le transfert de chaleur de la au moins une partie d'élément de frein (20a, 20b) à la zone d'élément de frein adjacente.

12. Ensemble frein (1) selon l'une quelconque des revendications précédentes, dans lequel
le au moins un élément de freinage (3a, 3b) est relié au mécanisme d'actionnement (5a, 5b, 5c, 5d) et/ou à un élément porteur (6), de préférence sur la base d'une liaison par ajustement forcé et/ou ajustement de forme, en particulier sur la base d'une liaison par encliquetage.

13. Ensemble frein (1) selon la revendication 12, dans lequel
l'ensemble frein (1) et/ou le au moins un élément de freinage (3a, 3b) comprend une partie d'isolement d'élément de freinage (31a, 31b) agencée entre la partie du au moins un élément de freinage (3a, 3b) destinée à l'appariement par frottement avec la au moins une partie de frein d'élément de frein (20a, 20b) et la liaison au mécanisme d'actionnement (5a, 5b, 5c, 5d) et/ou à un élément porteur (6).

14. Véhicule comprenant un ensemble frein (1) selon l'une des revendications 1 à 13, dans lequel le véhicule est un véhicule utilitaire et/ou un véhicule électrique ou hybride.
